# EUROPÄISCHE PATENTANMELDUNG

(11) **EP 2 461 132 A1**
(43) Veröffentlichungstag der Anmeldung: **06.06.2012**
(21) Anmeldenummer: 10193428.9
(22) Anmeldetag: 02.12.2010
(51) Int. Cl.: G01C 15/00, G01B 11/27

(54) **Teleskop zur Verwendung in einem Vermessungsinstrument und Verfahren zur automatisierten Autokollimation eines Teleskops eines Vermessungsinstruments mit einem Autokollimationsziel**

(71) Anmelder: Leica Geosystems AG, 9435 Heerbrugg (CH)
(72) Erfinder: Nindl, Daniel, 6800 Feldkirch (AT); Lienhart, Werner, A-6900, Bregenz (AT)
(74) Vertreter: Kaminski Harmann

(57) **Zusammenfassung**

Die Erfindung betrifft ein Verfahren zur automatisierten Autokollimation, als Ausrichten eines eine optische Achse definierenden Teleskops eines Vermessungsinstruments derart, dass die optische Achse senkrecht zu einer spiegelnden Oberfläche eines Autokollimationsziels, insbesondere eines beschichteten Planspiegels, steht.

Dabei erfolgen die folgenden Schritte:
a) Ausrichten des Teleskops auf das Autokollimationsziel,
b) Beleuchten eines Fadenkreuzes in dem Teleskop;
c) Fokussieren des Teleskops auf unendlich;
d) Erfassen des Autokollimationsziels und des von der spiegelnden Oberfläche reflektierten, beleuchteten Fadenkreuzes (1) oder des beleuchteten Fadenkreuzes mittels einer in dem Teleskop oder einem zweiten Teleskop angeordneten Bilderfassungseinrichtung;
e) Bestimmen des Fadenkreuzmittelpunkts in dem Bild;
f) Bestimmten des horizontalen (Δpx) und des vertikalen (Δpy) Abstands des Fadenkreuzmittelpunkts von der optischen Achse des Teleskops in dem Bild;
g) Umwandeln des horizontalen (Δpx) und des vertikalen (Δpy) Abstands des Fadenkreuzmittelpunkts in einen horizontalen (ΔH) und einen vertikalen (ΔV) Abweichungswinkel der aktuellen Ausrichtung des Teleskops von der Autokollimations-Ausrichtung des Teleskops.

## Beschreibung

Die Erfindung betrifft ein Teleskop zur Verwendung in einem Vermessungsinstrument und ein Verfahren zur automatisierten Autokollimation eines Vermessungsinstruments, in dem das Teleskop eingesetzt ist.

Bekannterweise dient ein als Autokollimation bezeichnetes Verfahren einerseits dazu, eine Neigung eines Autokollimationsziels zu bestimmen und andererseits dazu, eine Orientierung des Autokollimationsziels zu bestimmen. Als Neigung ist üblicherweise eine Abweichung eines Vertikalwinkels von einer Sollposition bezeichnet, während mit Orientierung eine Abweichung eines Horizontalwinkels von der Sollposition bezeichnet wird.

Üblicherweise wird als Autokollimationsziel ein ebener Spiegel eingesetzt, der an einem Gegenstand angebracht ist, dessen Neigung und Orientierung zu bestimmen sind. Bei dem Gegenstand kann es sich z.B. um Bauteile handeln, die in einer Produktionsanlage mit anderen Bauteilen exakt zu verbinden sind. Ein Beispiel sind KFZ-Türen, die in einer Produktionsanlage zum Einbau in eine KFZ-Karosserie sehr genau ausgerichtet sein müssen, um exakt eingepasst werden zu können, ohne dass es zu Abschaltungen des Fliessbands kommt.

Ein zweiter Zweck eines Autokollimationsvorgangs ist es, eine optische Bezugslinie herzustellen, die senkrecht auf das Autokollimationsziel steht. In diesem Fall ist es erforderlich anstelle des Ziels selbst, das zur Autokollimation verwendete Teleskop so einzurichten, dass dessen optische Achse genau senkrecht auf das Autokollimationsziel steht.

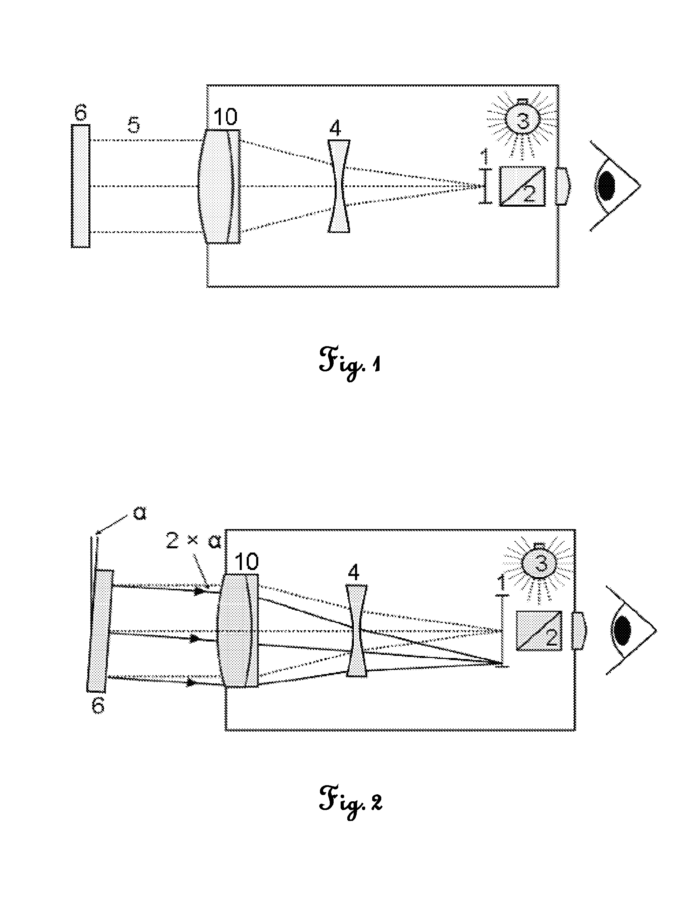

Bisher wurde eine derartige Autokollimation manuell durchgeführt. Dazu wird ein Teleskop, dessen Aufbau aus Fig. 1 schematisch ersichtlich ist, in Richtung des Autokollimationsziels ausgerichtet. Als nächstes wird das Teleskop durch eine Verschiebung einer beweglich an der optischen Achse des Teleskops angeordneten Fokuslinse 4 auf "unendlich" eingestellt.

Der Benutzer ist nun in der Lage, ein mittels einer Beleuchtungseinrichtung 3 über einen Strahlenteiler 2 beleuchtetes Fadenkreuz 1 sowie dessen am Autokollimationsziel 6 reflektiertes Spiegelbild in der Bildebene zu erkennen. In dem idealen Fall, dass das Autokollimationsziel 6 genau senkrecht zur optischen Achse des Teleskops ausgerichtet ist, fallen das Fadenkreuz 1 und dessen Spiegelbild zusammen, und keine weiteren Massnahmen sind erforderlich.

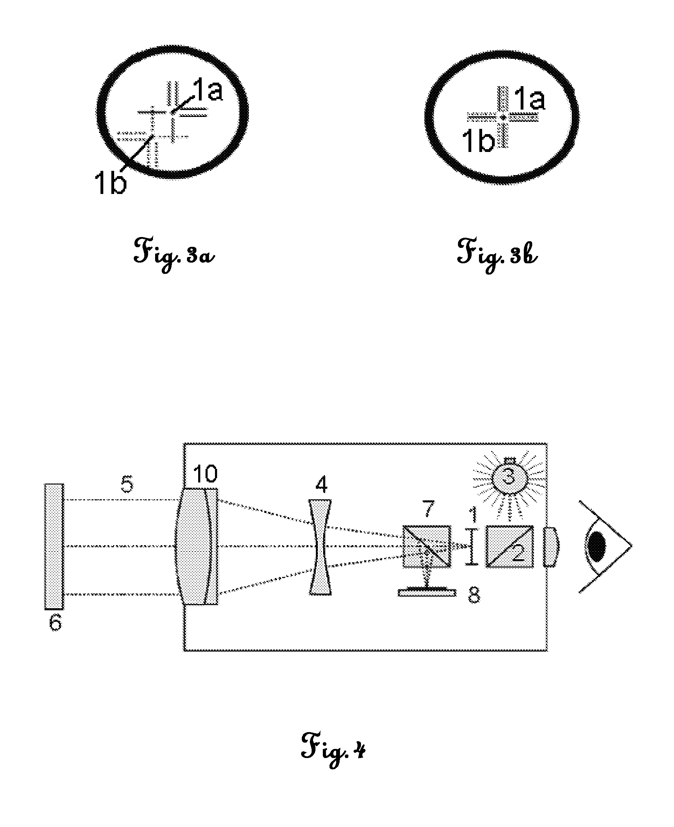

Aus Fig. 2 ist schematisch ein Fall ersichtlich, in dem das Autokollimationsziel nicht genau senkrecht zur optischen Achse des Teleskops ausgerichtet liegt. Hier erkennt der Benutzer eine von der Neigung und der Orientierung des Autokollimationsziels 6 abhängige Abweichung zwischen dem Fadenkreuz 1a und dessen Spiegelbild 1b, die in Fig. 3a beispielhaft dargestellt ist. Zur Korrektur der Abweichung ändert der Benutzer den Horizontal- und den Vertikalwinkel des Teleskops bis das Fadenkreuz und sein Spiegelbild zusammenfallen, wie es in Fig. 3b dargestellt ist. Aus dem Horizontal- und Vertikalwinkel des Teleskops werden dann die Neigung und die Orientierung des Autokollimationsziels ermittelt. Aus Fig. 2 ist ein Fall ersichtlich, in dem ein vertikaler Neigungswinkel des Autokollimationsziels α beträgt. Ein Reflexionswinkel, mit dem die Lichtstrahlen 5 reflektiert werden, beträgt entsprechend 2 × α. Auf eine Darstellung der horizontalen Abweichung in Fig. 2 wurde aus Gründen der vereinfachten Darstellung verzichtet.

Um die optische Achse des Teleskops senkrecht auf das Autokollimationsziels fallen zu lassen, ist daher entweder das Teleskop um α in vertikaler Richtung zu drehen, oder das Autokollimationsziel ist in vertikaler Richtung um den Winkel α zu drehen. Eine analoge Drehung des Teleskops bzw. des Autokollimationsziels in horizontaler Richtung führt dann dazu, dass die optische Achse des Teleskops senkrecht auf das Autokollimationsziel liegt.

In Fig. 3a ist ein unvollständiges Fadenkreuz 1a dargestellt. Eine Reflexion des Fadenkreuzes 1 durch einen am Autokollimationsziel angebrachten Spiegel führt zu einem Spiegelbild 1b des Fadenkreuzes 1a. Durch das verstellen des Teleskops bzw. des Autokollimationsziels wie in den voran stehenden Absätzen beschrieben wurde, kommt es zu einer Verschiebung des Spiegelbilds, bis das Fadenkreuz 1a bei genauer, senkrechter Ausrichtung zum Autokollimationsziel 6 zusammen mit seinem Spiegelbild 1b das in Fig. 3b dargestellte Bild eines vollständigen Fadenkreuzes ergibt.

Es besteht Bedarf für ein Teleskop, mit dem eine Autokollimation automatisch durchführbar ist, sowie für ein Verfahren zur automatischen Durchführung einer Autokollimation.

Ein erfindungsgemässes Teleskop ist zum Einsatz in einem Vermessungsinstrument vorgesehen. Das Teleskop weist eine Lichtquelle, ein durch die Lichtquelle beleuchtbares Fadenkreuz und einen ersten Strahlenteiler auf. Der Strahlenteiler ist an einem proximalen Ende des Teleskops angeordnet, um von der Lichtquelle abgegebene Lichtstrahlen entlang der optischen Achse des Teleskops abzulenken. An einem distalen Ende des Teleskops ist eine entlang der optischen Achse hin und her bewegliche Fokuslinse angeordnet. Als distales Ende des Teleskops wird das dem Ziel zugewandte Ende des Teleskops bezeichnet. Als proximales Ende wird hier das von dem Ziel abgewandte Ende bzw. ein Okular des Teleskops bezeichnet.

Ausserdem ist zwischen dem ersten Strahlenteiler und der beweglichen Fokuslinse ein zweiter Strahlenteiler angeordnet, der ausgelegt ist, von einem Autokollimationsziel reflektierte Lichtstrahlen zu einer Abweichungsbestimmungseinrichtung umzulenken, durch die eine Abweichung der Lichtstrahlen von der optischen Achse des Teleskops bestimmt werden kann.

Aufgrund der Abweichungsbestimmungseinrichtung ist es vorteilhaft möglich, automatisch zu erkennen, ob die zu dem Autokollimationsziel ausgesendeten Lichtstrahlen, insbesondere ein entlang der optischen Achse des Teleskops ausgesendeter Lichtstrahl, nicht parallel zur bzw. nicht entlang der optischen Achse reflektiert werden. Durch die Bestimmung der Abweichung können darauf folgend eine Neigung und eine Orientierung des Autokollimationsziels ermittelt werden.

Lichtstrahlen im Sinne der Erfindung können auch Laserstrahlen sein. Falls Laserstrahlen eingesetzt werden, kann das beleuchtete Fadenkreuz entfallen.

Bevorzugt können die von dem Autokollimationsziel reflektierten Lichtstrahlen zu einer Bilderfassungseinrichtung umgelenkt werden. Die Abweichung der Lichtstrahlen von der optischen Achse des Teleskops kann dann aus einem von der Bilderfassungseinrichtung erfassten Bild bestimmt werden.

Vorteilhaft kann das Teleskop ausserdem eine Schnittstelle zur Kommunikation mit einem externen Gerät aufweisen. Beispiele für externe Geräte sind ein PC, ein tragbarer Rechner, ein Mobiltelefon, ein PDA. Die Schnittstelle kann z.B. eine Drahtverbindung, eine WLAN-Verbindung, eine Bluetooth-Verbindung oder eine Infrarotverbindung sein.

Bevorzugt kann das beleuchtbare Fadenkreuz auf der optischen Achse des Teleskops zwischen dem ersten Strahlenteiler und der beweglichen Fokuslinse und/oder zwischen dem ersten Strahlenteiler und dem zweiten Strahlenteiler angeordnet sein.

Alternativ kann das beleuchtbare Fadenkreuz zwischen der Lichtquelle und dem ersten Strahlenteiler angeordnet sein und ein zweites Fadenkreuz zwischen dem proximalen Ende des Teleskops und dem ersten Strahlenteiler angeordnet sein.

Bevorzugt können das beleuchtbare Fadenkreuz und das zweite Fadenkreuz unvollständig ausgebildet sein. Dabei kann das beleuchtbare Fadenkreuz durch seine Spiegelung um die horizontale und/oder die vertikale Achse und/oder durch das zweite Fadenkreuz und/oder eine Spiegelung des zweiten Fadenkreuzes um seine horizontale und/oder seine vertikale Achse vervollständigbar sein. Damit ist durch einen Benutzer erkennbar, dass die optische Achse des Teleskops senkrecht auf das Autokollimationsziel steht, wenn das Fadenkreuz vollständig zu erkennen ist.

Insbesondere ist das erfindungsgemässe, oben beschriebene Teleskop Teil eines Vermessungsinstruments, insbesondere eines Industrievermessungs-Theodolits oder einer Industrievermessungs-Totalstation. Dabei kann das Vermessungsinstrument - gattungsgemäss, d.h. wie dem Fachmann bekannt - umfassen eine insbesondere auf ein Stativ montierbare Basis, ein an der Basis um eine Drehachse drehbar gelagerten Oberteil, sowie dem am Oberteil um eine Schwenkachse schwenkbar gelagerten Teleskop. Zudem kann eine Auswerte- und Steuereinheit vorhanden sein.

Die räumliche Ausrichtung der Anzieleinheit gegenüber der Basis ist dabei über zwei Winkelmesser erfassbar und zudem kann - je nach Ausbaustufe des Vermessungsinstruments - ein erster und ein zweiter Drehantrieb das Oberteil bzw. das Teleskop antreib- und ausrichtbar machen. Ausserdem kann auch eine Distanzmessfunktionalität durch das Teleskop gewährleistet sein.

Erfindungsgemäss kann das Vermessungsinstrument nun eine nach Auslösung zumindest teilweise automatisch ablaufende Autokollimations-Funktionalität aufweisen, in deren Rahmen das im Folgenden näher beschriebene Verfahren (nämlich dem Verfahren zur Autokollimation, als Ausrichten des eine optische Achse definierenden Teleskops derart, dass die optische Achse senkrecht zu einer spiegelnden Oberfläche eines Autokollimationsziels, insbesondere eines beschichteten Planspiegels, steht) automatisch gesteuert durch die Auswerte- und Steuereinheit durchführbar ist.

Das erfindungsgemässe Verfahren zur Autokollimation weist folgende Schritte auf:
a) Ausrichten eines Teleskops auf ein Autokollimationsziel;
b) Beleuchten eines Fadenkreuzes in dem Teleskop;
c) Fokussieren des Teleskops auf unendlich;
d) Erfassen des Autokollimationsziels und des von diesem reflektierten, beleuchteten Fadenkreuzes oder des beleuchteten Fadenkreuzes mittels einer Bilderfassungseinrichtung;
e) Bestimmen des Fadenkreuzmittelpunkts in dem Bild;
f) Bestimmten des horizontalen und des vertikalen Abstands des Fadenkreuzmittelpunkts von der optischen Achse des Teleskops in dem Bild;
g) Umwandeln des horizontalen und des vertikalen Abstands des Fadenkreuzmittelpunkts in einen horizontalen und einen vertikalen Abweichungswinkel.

Die Bezeichnung sämtlicher im Rahmen des erfindungsgemässen Verfahrens erfolgenden Tätigkeiten als Schritt a), Schritt b), etc. impliziert dabei keineswegs ein notwendigerweise getrennt zu erfolgendes Durchführen dieser Tätigkeiten. Auch wird durch die Namensgebung der Schritte mit a), b), etc. nicht notwendigerweise eine spezielle Reihenfolge der Durchführung der Tätigkeiten gefordert. Hingegen können im Rahmen des erfindungsgemässen Verfahrens die als Schritte a), b), etc. benannten Tätigkeiten auch kombiniert und/oder zusammengefasst (d.h. gemeinsam, zeitgleich oder mit zeitlichem Überschnitt) durchgeführt werden. Zudem können die erfindungsgemäss erfolgenden Tätigkeiten des Verfahrens (die hier lediglich aus Handhabungsgründen als "Schritte" benannt sind) auch in einer anderen als der oben angeordneten Reihenfolge durchgeführt werden. Rein beispielhaft kann - wie dem Fachmann klar - etwa das Beleuchten des Fadenkreuzes auch über einen weiten, insbesondere den gesamten, Zeitraum des Durchführens des Verfahrens erfolgen, oder es kann - ebenso rein beispielhaft - das Fokussieren des Teleskops auch sowohl vor, nach oder während des Schritts des Ausrichtens des Teleskops auf das Autokollimationsziel durchgeführt werden (bzw. auch teilweise zeitlich überschnitten).

Gemäss dem erfindungsgemässen Verfahren zur Autokollimation ist es nun möglich, automatisch zu erfassen, ob die optische Achse des Teleskops senkrecht auf ein Autokollimationsziel steht. Aus dem horizontalen und vertikalen Abstand des Fadenkreuzes von der optischen Achse in dem Bild ist es aufgrund einer vorangehenden Kalibrierung des Teleskops bzw. eines das Teleskop aufweisenden Vermessungsinstruments möglich, eine Neigung und eine Orientierung des Autokollimationsziels zu ermitteln.

Vorteilhaft kann das erfindungsgemässe Verfahren folgende zusätzlichen Schritte aufweisen:
h) Bewegen des Teleskops um die Hälfte des horizontalen und des vertikalen Abweichungswinkels, damit die optische Achse des Teleskops senkrecht auf das Autokollimationsziel steht,
i) Messen des Horizontal- und des Vertikalwinkels des Teleskops,
j) Berechnen des Neigungswinkels und des Orientierungswinkels des Ziels aus dem gemessenen Horizontal- und Vertikalwinkel.

Durch die Anwendung dieser zusätzlichen Verfahrensschritte wird das Teleskop so ausgerichtet, dass seine optische Achse senkrecht auf das Autokollimationsziel steht.

Alternativ kann das erfindungsgemässe Verfahren folgende zusätzlichen Schritte auffassen:
i2) Messen des Horizontal- und des Vertikalwinkels des Teleskops,
k) Bestimmen des Neigungswinkels und des Orientierungswinkels des Ziels durch das Addieren des halben horizontalen und des halben vertikalen Abweisungswinkels zu dem gemessenen Horizontal- und Vertikalwinkel des Teleskops.

Dadurch ist es einfach möglich, den Neigungswinkel und den Orientierungswinkel des Autokollimationsziels zu bestimmen, ohne dass es erforderlich ist, das Teleskop zu bewegen.

Vorteilhaft kann bei einem der voranstehend erwähnten Verfahren die optische Achse dem Bildmittelpunkt entsprechen. Die Bestimmung des horizontalen und des vertikalen Abstands des Fadenkreuzmittelpunkts von der optischen Achse des Teleskops in dem Bild kann aus der Zahl der Pixel zwischen dem Fadenkreuzmittelpunkt und der optischen Achse ermittelt werden.

Vorteilhaft besteht die Möglichkeit, die Schritte ab dem Schritt e) in einer iterativen Weise durchzuführen, bis der horizontale und der vertikale Abweichungswinkel unterhalb eines vorbestimmten Schwellwerts liegen.

Vorteilhaft besteht ausserdem die Möglichkeit, die Schritte a), c) und d) mittels automatischem Abfahren eines vorbestimmten Suchmusters durch eine automatische Drehung des Teleskops durchzuführen. Dabei kann die Fokuslinse automatisch scharfgestellt werden und das Ziel durch einen Vergleich des erfassten Bilds mit einem vorgegebenen Vergleichsbild erkannt werden.

Als Vergleichsbild kann dabei eine Ansicht des Vermessungsinstruments mit dem Teleskop dienen, wie es in einem an dem Autokollimationsziel angebrachten Spiegel zu erkennen ist, wenn die optische Achse des Teleskops senkrecht auf den Spiegel bzw. auf das Autokollimationsziel steht. Jedoch können alternativ auch andere Referenzbilder als Vergleichsbilder herangezogen werden, z.B. ein am Teleskop angeordnetes markantes Zeichen oder eine eigens dafür auf das Vermessungsinstrument angeklebte Markierung (Code-Marke).

Vorteilhaft ist es möglich, das Ziel gemäss dem horizontalen und dem vertikalen Abweichungswinkel derart zu bewegen, dass es senkrecht auf die optische Achse des Teleskops liegt. Dadurch ist ein exaktes Anpassen des Autokollimationsziels an die optische Achse des Teleskops möglich.

Insbesondere kann das Verfahren auch so ausgeführt werden, dass als Ziel ein zweites Teleskop mit einer Achsenkamera (OAC, On Axis Camera) dient, und im Schritt f) der horizontale und der vertikale Abstand des Fadenkreuzmittelpunkts von der optischen Achse des zweiten Teleskops in dem Bild als Grundlage für die folgenden Schritte bestimmt werden.

Insbesondere kann dann auch eines der Teleskope um den horizontalen und den vertikalen Abweichungswinkel bewegt werden, oder beide Teleskope können um jeweils den halben horizontalen und den halben vertikalen Abweichungswinkel bewegt werden. Zur Steuerung und gegenseitigen Abstimmung des Kollimationsvorgangs können beide Teleskope (bzw. beide Vermessungsinstrumente) z.B. mit einer externen, gemeinsamen Steuer- und Kontrolleinrichtung verbunden sein. Alternativ können die beiden Instrumente auch derart ausgelegt sein, dass diese - zur Steuerung des automatischen gegenseitigen Kollimationsvorgangs - miteinander Kommunizieren können (z.B. über eine Funkverbindung). Der Vorgang kann in diesem Fall ohne weitere externe Steuer- und Kontrolleinrichtung automatisch ablaufen. Z.B. kann eines der beiden Instrumente als "Masterinstrument" die automatische Steuerung des gegenseitigen Kollimationsvorgangs übernehmen (d.h. die Steuerung beider Instrumente) und das andere Instrument dann als "Slave" die jeweils masterinstrumentseitig aus dem erfassten Bild abgeleiteten Steuer-Befehle lediglich ausführen.

Dadurch ist es möglich, zwei Teleskope so zueinander auszurichten, dass ihre optischen Achsen entweder parallel liegen oder sogar exakt zusammenfallen. Dieser Vorgang wird auch als gegenseitige Kollimation bezeichnet.

Weitere Merkmale und Vorteile der Erfindung werden aus der folgenden Beschreibung ersichtlich, die zusammen mit den anhängenden Figuren zu lesen ist, in denen:
- Fig. 1: schematisch eine Schnittansicht eines zur Autokollimation eingesetzten Teleskops gemäss Stand der Technik zeigt;
- Fig. 2: schematisch eine Schnittansicht des Teleskops aus Fig. 1 im Fall einer Fehlausrichtung eines Autokollimationsziels zeigt;
- Fig. 3a-b: Ansichten eines geteilten Fadenkreuzes sind, in denen das Autokollimationsziel fehlausgerichtet ist bzw. senkrecht zur optischen Achse des Teleskops liegt;
- Fig. 4: schematisch eine Schnittansicht eines Teleskops zur Autokollimation gemäss einer Ausführungsform der Erfindung zeigt;
- Fig. 5: ein Ablaufdiagramm eines Autokollimationsvorgangs gemäss einer Ausführungsform der Erfindung zeigt;
- Fig. 6a-d: verschiedene Ansichten eines Fadenkreuzes während des Autokollimationsvorgangs der Fig. 5 und der Fig. 10 sind;
- Fig. 7: ein Ablaufdiagramm eines Autokollimationsvorgangs gemäss einer anderen Ausführungsform der Erfindung zeigt;
- Fig. 8a-e: schematisch eine Schnittansicht eines Teleskops zur Autokollimation gemäss einer weiteren Ausführungsform der Erfindung und eine exemplarische Ausgestaltung der beiden Fadenkreuze sowie Ansichten dieser von der Kamera aus bzw. bei Betrachtung durch das Okular zeigen;
- Fig. 9a-b: schematisch jeweils Schnittansichten von zwei Teleskopen zeigen, die gemäss der Erfindung parallel auszurichten sind; und
- Fig. 10: ein Ablaufdiagramm eines Vorgangs zur parallelen Ausrichtung zweier Teleskope zeigt.

Derzeit bevorzugte Ausführungsformen der Erfindung werden anhand von Figuren 4 bis 10 beschrieben.

Figur 4 zeigt ein Teleskop gemäss einer Ausführungsform der Erfindung, das an einem Vermessungsinstrument (im Folgenden Instrument) eingesetzt ist. An einem proximalen Ende des Teleskops, das im Bild rechts liegend angeordnet ist, befindet sich ein Strahlenteiler 2 an der optischen Achse des Teleskops. Der Strahlenteiler dient zum Ablenken von Lichtstrahlen einer nahe dem Strahlenteiler 2 angeordneten Beleuchtungseinrichtung 3 entlang der optischen Achse des Teleskops in Richtung eines distalen Endes des Teleskops.

Die Beleuchtungseinrichtung 3 kann auf verschiedene Weisen ausgeführt sein. Beispielsweise kann sie in Form einer Aufstecklösung demontierbar an dem Teleskop angebracht werden, sie kann aber auch fix in das Teleskop integriert sein.

Die von dem Strahlenteiler 2 entlang der optischen Achse des Teleskops abgelenkten Lichtstrahlen dienen zur Beleuchtung eines Fadenkreuzes 1, das zwischen dem Strahlenteiler 1 und einem zweiten Strahlenteiler 7 angeordnet ist. Hinter dem zweiten Strahlenteiler 7 befindet sich eine entlang der optischen Achse verschiebbare Fokuslinse 4. Durch eine Verschiebung der Fokuslinse 4 in eine "Unendlichstellung" werden die Lichtstrahlen 5 in Kombination mit einer an dem distalen Ende des Teleskops angebrachten Sammellinse 10 exakt parallel zur optischen Achse ausgerichtet und fallen auf ein Autokollimationsziel 6 bzw. auf einen an diesem angebrachten Spiegel 6.

Von dem Spiegel 6 werden die Lichtstrahlen 5 reflektiert, um wieder durch die Sammellinse 10 und die Fokuslinse 4 gebündelt und von dem zweiten Strahlenteiler 7 auf einen Bildsensor 8 einer Achsenkamera (On Axis Camera, OAC) wie z.B. ein CMOS, ein CCD oder andere abgeleitet zu werden, auf den somit ein Bild des Fadenkreuzes 1 projiziert wird. Die Bilddaten werden mittels einer nicht dargestellten Schnittstelle zu einer Steuereinheit übertragen. Als Steuereinheit können z.B. ein integrierter oder externer Rechner, ein PDA oder andere geeignete Geräte eingesetzt werden. An einer Anzeige bzw. einem Bildschirm der Steuereinheit kann das Bild auch angezeigt werden.

Das Teleskop ist dabei zur Verwendung im Rahmen des zuvor bereits beschriebenen erfindungsgemässen Verfahrens (nämlich dem Verfahren zur Autokollimation, als Ausrichten des Teleskops derart, dass die optische Achse senkrecht zu einer spiegelnden Oberfläche eines Autokollimationsziels, insbesondere eines beschichteten Planspiegels, steht) ausgebildet.

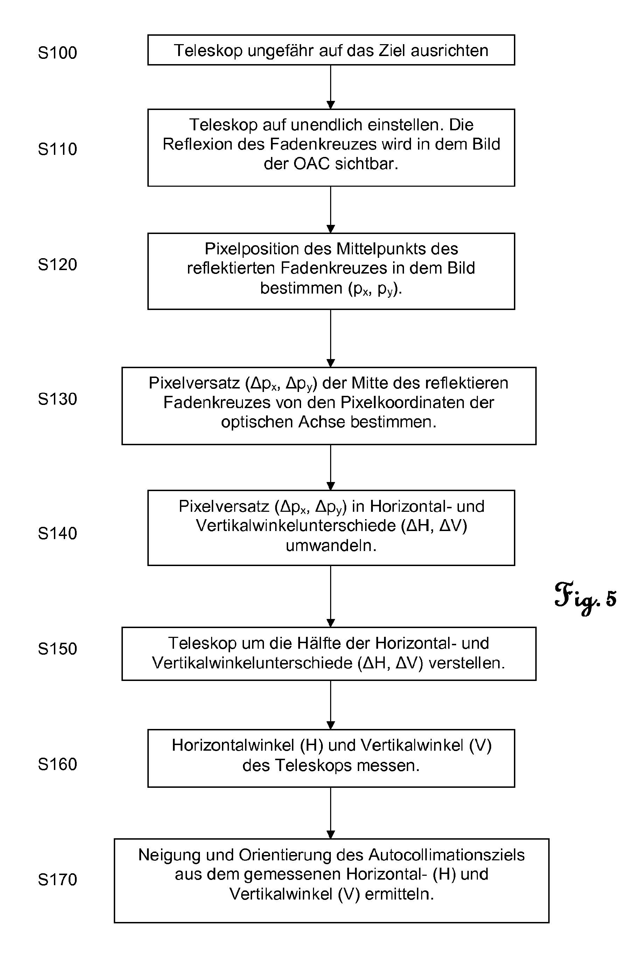

Das Ablaufdiagramm der Figur 5 stellt den Autokollimationsvorgang gemäss der Erfindung dar, in dem eine Bezugslinie ermittelt wird, die senkrecht auf eine reflektierende Oberfläche eines Autokollimationsziels 6 liegt.

Als erstes wird im Schritt 100 (im Folgenden S100 etc.) das Teleskop von einem Benutzer ungefähr auf das Autokollimationsziel 6 ausgerichtet. Als Autokollimationsziel 6 dient insbesondere ein ebener Spiegel 6, der an einem Gegenstand angebracht ist, dessen Ausrichtung ermittelt werden soll, bzw. zu dem das Teleskop ausgerichtet werden soll.

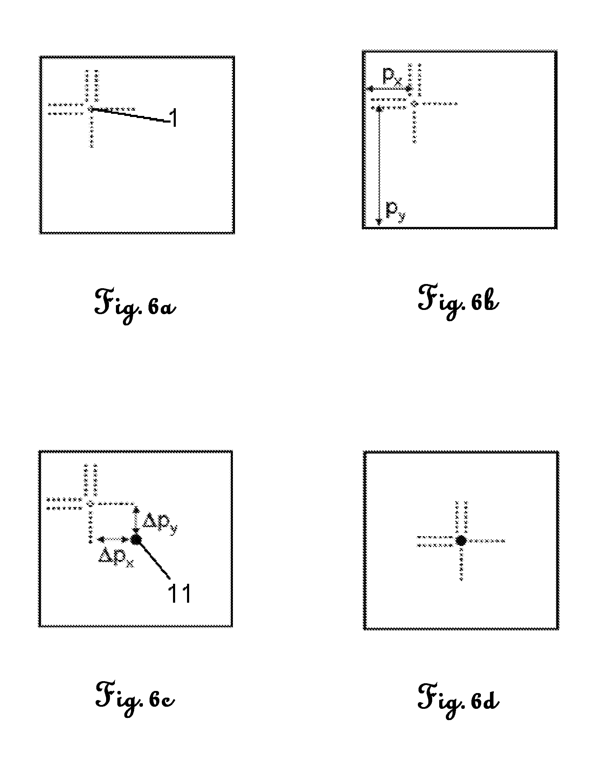

Als nächstes erfolgt in S110 eine Einstellung des Teleskops auf unendlich. Dadurch wird ein Spiegelbild des Fadenkreuzes 1 sichtbar bzw. und ist für einen Anwender bei einem Blick durch das Teleskop sichtbar, bzw. auf der Anzeige oder dem Bildschirm der Steuereinheit zu erkennen, wie aus Figur 6a ersichtlich ist.

Als nächstes werden in S120 die Pixelkoordinaten (pₓ, p_{y}) des Mittelpunkts des Spiegelbilds des Fadenkreuzes bestimmt, wie aus Figur 6b ersichtlich ist. Hierzu können Verfahren wie z.B. Bildverarbeitung durch die Berechnung des Schwerpunkts des Fadenkreuzes, ein Bildvergleich mit gespeicherten Mustern (pattern recognition) oder Andere sein.

Im S130 wird dann als nächstes der Pixelversatz Δp_{X und} Δp_{y}, d.h. der Abstand zwischen der Pixelposition 11 der optischen Achse und des Mittelpunkts des Fadenkreuzes 1 in Pixel ermittelt, wie aus Figur 6c ersichtlich ist. Die Pixelposition 11 der optischen Achse ist durch eine vorangegangene Kalibrierung des Teleskops bekannt. Bevorzugt ist das Teleskop so ausgebildet, dass die Pixelposition 11 der optischen Achse sich genau in der Mitte des Sensors bzw. in der Bildmitte befindet.

Der Pixelversatz wird im S140 in Horizontal- und Vertikalunterschiede ΔH und ΔV umgewandelt. Durch die vorangegangene Kalibrierung des Teleskops ist nämlich ausserdem eine Transformationsfunktion bekannt, mit der bestimmte Pixelabstände einem bestimmten Winkelunterschied zugeordnet werden können. Somit ist nach dem S140 die Lage der optischen Achse des Teleskops zum Autokollimationsziel bekannt.

Folgend auf die Ermittlung der Horizontal- und Vertikalwinkelunterschiede ΔH und ΔV wird das Teleskop in S150 um die Hälfte der Horizontal- und Vertikalwinkelunterschiede ΔH und ΔV, d.h. um ΔH/2 und ΔV/2 verstellt, wodurch die optische Achse des Teleskops exakt senkrecht zu dem Autokollimationsziel 6 liegt. Wie aus Figur 6d ersichtlich ist, fällt nun im Bild der Mittelpunkt des reflektieren Fadenkreuzes 1 mit der Position der optischen Achse 11 zusammen. Die optische Achse bildet jetzt eine Bezugslinie, die genau senkrecht auf die reflektierende Oberfläche des Autokollimationsziels 6 liegt. Ist dies nicht der Fall, so kann der durch eine Kalibration bestimmte Versatz auch in der Auswertung berücksichtigt und herangezogen werden.

Gemäss einer Variante dieser Ausführungsform können die Schritte 120 bis 150 auch so lange wiederholt ausgeführt werden, bis die ermittelten Winkelunterschiede ΔH und ΔV kleiner als vorherbestimmte Schwellwerte sind, wodurch eine noch höhere Genauigkeit bei der Bestimmung der Bezugslinie (d.h. eine geringere Restabweichung von der "idealen" Autokollimations-Ausrichtung) erreicht werden kann. Wird beispielsweise festgestellt, dass nach erstmaligem Durchführen der Schritte 120 bis 150 - z.B. aufgrund unzureichender Kamerakalibrierung (etwa hinsichtlich Verzeichnung oder Umrechnung von Pixelpositionen in Fahrwege) oder Positionierungenauigkeit nach dem Fahren von ΔH/2 und ΔV/2 - der Fadenkreuzmittelpunkt nicht mit der optischen Achse im Bild hinreichend genau übereinstimmt (bzw. die beiden Fadenkreuze noch nicht hinreichend genau übereinstimmen), können in weiteren Iterationsdurchgängen diese Schritte 120 bis 150 jeweils wiederholt werden, bis die gewünschte/vorgegebene Restabweichung von der "idealen" Autokollimations-Ausrichtung erzielt ist. Dies stellt ein iteratives Verfahren gemäss der Erfindung dar.

Falls es erwünscht ist, die Neigung und Orientierung des Autokollimationsziels 6 zu ermitteln, anstelle eine Bezugslinie senkrecht auf das Autokollimationsziel 6 auszurichten, werden aus den in S160 gemessenen Horizontalwinkeln und Vertikalwinkeln H und V des Teleskops in S170 die Neigung und Orientierung des Autokollimationsziels 6 ermittelt. Der Neigungswinkel entspricht dabei dem Vertikalwinkel V und der Orientierungswinkel dem Horizontalwinkel H. Wird das Autokollimationsziel entlang eines Objektes bewegt, dann können aus den absoluten Neigungswerten relative Neigungsänderungen abgeleitet werden und diese z.B. zur Ebenheitsprüfung des Objektes herangezogen werden.

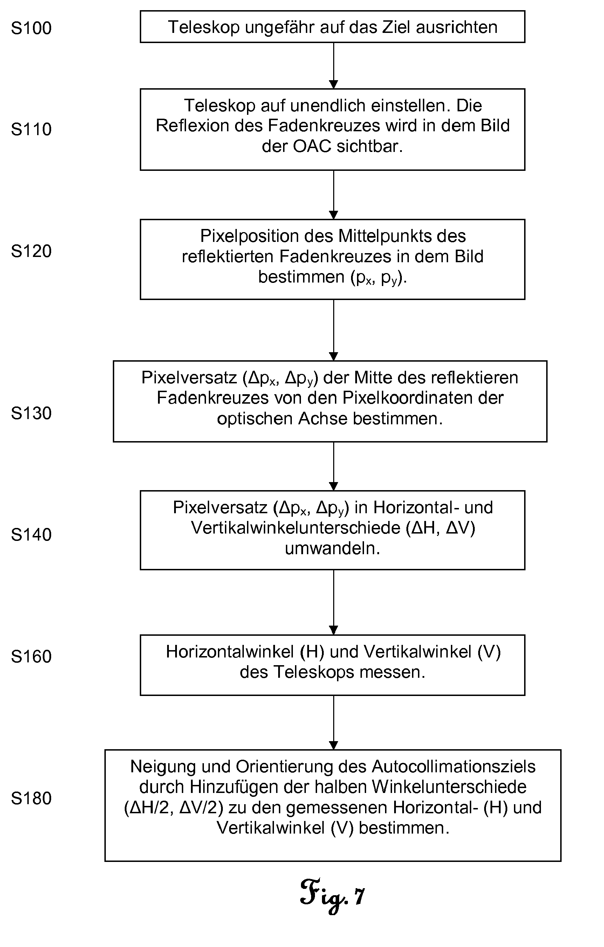

Alternativ zu der anhand von Figur 5 beschriebenen Vorgangsweise können die Neigung und Orientierung auch anhand der in Figur 7 dargestellten Vorgangsweise ermittelt werden. Die Vorgangsweise gleicht den Schritten 100 bis 160 der Figur 5, allerdings wird S150 ausgelassen, d.h., es ist nicht erforderlich, das Teleskop zu bewegen. Stattdessen werden in S180 die halben Winkelunterschiede ΔH/2 und ΔV/2 zu den in S160 gemessenen Horizontal- und Vertikalwinkeln H und V hinzugezählt und somit die Neigung und die Orientierung des Autokollimationsziels 6 ermittelt.

Aus der Automatisierung ergeben sich u. a. Vorteile, da ein Autokollimationsvorgang schneller durchführbar ist als mittels der im Stand der Technik genannten Verfahren.

Ausserdem kann ein Autokollimationsvorgang regelmässig automatisch wiederholt werden, was zu Vereinfachungen hinsichtlich einer Überwachung eines Produktionsablaufs führt. Die Anwendung des bekannten Verfahrens wäre für eine derartige Anwendung zu personal- und zeitaufwendig.

Da das Verfahren automatisiert ist, entfallen Fehlerquellen durch menschliche Benutzer wie falsches Ablesen von Messwerten etc.

Falls lediglich eine Bestimmung der Neigung und Orientierung des Autokollimationsziels erforderlich ist, kann der Schritt, das Fadenkreuz 1 und sein Spiegelbild 1 zusammenzuführen, bzw. das Spiegelbild 1 des Fadenkreuzes mit der Position 11 der optischen Achse zusammenzuführen, entfallen. Dies führt zu einem Geschwindigkeitsgewinn.

Ausserdem können Autokollimationsvorgänge in Umgebungen durchgeführt werden, die für Menschen gefährlich und daher nicht zugänglich oder nur unter Einschränkungen zugänglich sind.

Falls das eingesetzte Teleskop mit einem Motor für die Verstellbewegungen des Teleskops versehen ist, und falls die Fokuslinse ebenfalls über einen Motor bewegt werden kann, können auch die ansonsten manuell durchzuführenden Schritte automatisiert durchgeführt werden, wie aus der folgenden Tabelle ersichtlich ist.

Tabelle 1 stellt mögliche Automatisierungsgrade unterschiedlicher Instrumente dar. Alle Instrumente weisen eine koaxial zur optischen Achse angeordnete Kamera (sog. On-Axis-Kamera, OAC) und die oben beschriebenen Vorrichtungen zur automatischen Autokollimation auf.

**Tabelle 1**

| Schritt | Aufgabe | Man. Instrument | Motorisierte Teleskop-bewegung | Motorisierte Teleskop-bewegung und motorisierte Fokuslinse |
|---|---|---|---|---|
| 100 | Ungefähres Ausrichten auf das Ziel | Manuell | Automatisch | Automatisch |
| 110 | Unendlich einstellen | Manuell | Manuell | Automatisch |
| 120 | Pixelposition des reflektierten Fadenkreuzes | Automatisch | Automatisch | Automatisch |
| 130 | Pixelversatz zur optischen Achse | Automatisch | Automatisch | Automatisch |
| 140 | Umwandlung des Pixel-versatzes in Winkelunter-schiede | Automatisch | Automatisch | Automatisch |
| 150 | Teleskop bewegen | Manuell | Automatisch | Automatisch |
| 160 | Winkel messen | Automatisch | Automatisch | Automatisch |
| 170/180 | Orientierung und Neigung des Ziels bestimmen | Automatisch | Automatisch | Automatisch |

S100 kann dabei automatisch durchgeführt werden, wenn die ungefähre Position des Instruments und des Autokollimationsziels 6 bekannt ist. Allerdings kann S100 auch insofern automatisiert durchgeführt werden, indem das motorisierte Teleskop ein vorgegebenes Suchmuster abfährt, und das Autokollimationsziel 6 mittels Bilderkennung erkannt wird. Als Vergleichsbild kann beispielsweise ein Spiegelbild des Teleskops dienen, das von dem an dem Autokollimationsziel angebrachten Spiegel reflektiert wird.

In dem Fall, dass die Schritte 100, 110 und 150 manuell durchgeführt werden, können gemäss einer bevorzugten Variante die entsprechenden Bewegungsrichtungen durch Pfeile auf der Anzeige oder dem Bildschirm der Steuereinheit vorgegeben werden. Dabei können auch Zahlenwerte angezeigt werden, die das erforderliche Bewegungsausmass darstellen.

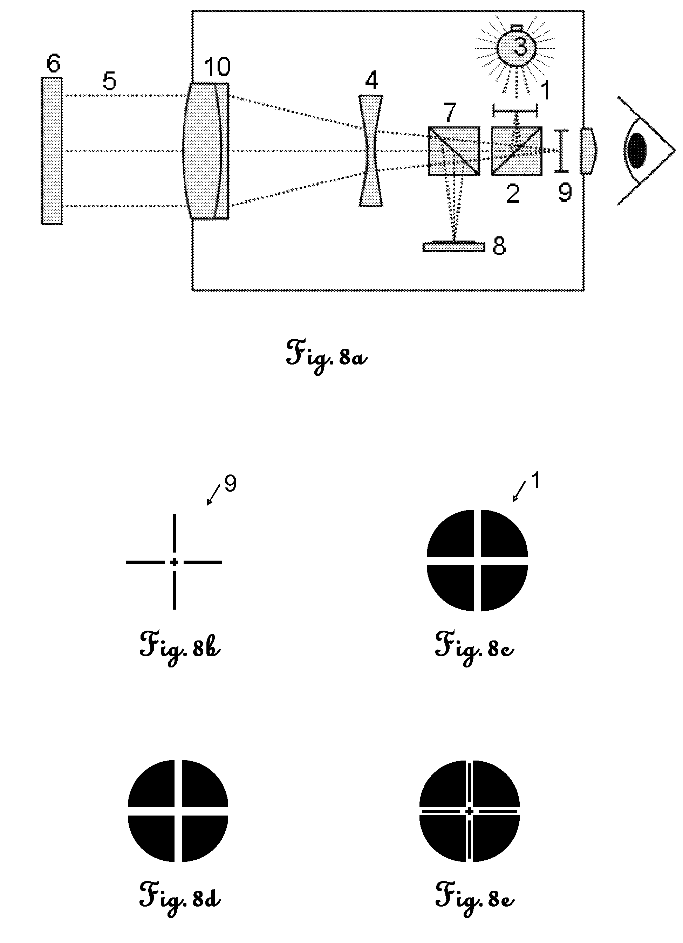

Aus Figur 8a ist eine weitere Ausführungsform eines Teleskops ersichtlich, das zur Autokollimation gemäss der Erfindung eingesetzt werden kann. In der folgenden Beschreibung werden nur Unterschiede zu dem in Figur 4 dargestellten Teleskop beschrieben, um Wiederholungen zu vermeiden.

Das beleuchtbare Fadenkreuz 1 ist anstelle an der optischen Achse zwischen der Beleuchtungseinrichtung 3 und dem Strahlenteiler 2 angeordnet. Somit wird das Fadenkreuz 1 direkt beleuchtet und die Lichtstrahlen 5 des beleuchteten Fadenkreuzes 1 entlang der optischen Achse abgelenkt. Die reflektieren Lichtstrahlen, die von dem zweiten Strahlenteiler 7 abgelenkt werden, werden gleich wie in der Ausführungsform der Figur 4 durch den Bildsensor 8 erfasst und entsprechend weiter verarbeitet.

Durch ein entsprechend auf das erste Fadenkreuz 1 (welches beispielhaft gemäss der Variante aus Figur 8c geformt sein kann) abgestimmtes zweites Fadenkreuz 9 (das zwischen dem proximalen Ende bzw. dem Okular des Teleskops und dem ersten Strahlenteiler 2 auf der optischen Achse angeordnet ist, nicht beleuchtet werden muss und beispielhaft gemäss der Variante aus Figur 8b geformt sein kann), kann einem Benutzer der manuelle Autokollimationsvorgang bzw. eine Augenmass-Überprüfung der automatischen Autokollimation erleichtert bzw. verbessert ermöglicht werden.

Das beleuchtete erste Fadenkreuz 1 wird also nicht direkt betrachtet oder anhand des Kamerasensors 8 aufgenommen, sondern dessen - am Kollimationsspiegel reflektiertes - Spiegelbild wird vom Kamerasensor 8 aufgenommen bzw. ist durch das Okular betrachtbar. Das nicht beleuchtete zweite Fadenkreuz 9 betrachtet der Benutzer direkt durch das Okular und es ist - aufgrund des Nichtbeleuchtens - kein Spiegelbild dieses zweiten Fadenkreuzes 9 bei Blick durchs Okular sichtbar. Weder das zweite Fadenkreuz 9 selbst noch dessen Spiegelbild (zweiteres aufgrund des Nichtbeleuchtens) werden vom Kamerasensor 8 aufgenommen (erklärend dazu zeigt Figur 8d ein Bild aus Sicht des Kamerasensors, worauf lediglich das Spiegelbild des ersten Fadenkreuzes 1 erscheint und eben nicht das zweite Fadenkreuz 9 und auch nicht dessen Spiegelbild).

Der Vorteil der Anordnung gemäss Figur 8a ist dabei, dass
- für das erste Fadenkreuz 1 (z.B. in seiner Form dahingehend optimiert, dass ein mit dem Kamerasensor 8 davon aufgenommenes Kamerabild anhand von Bildverarbeitung möglichst einfach und präzise ausgewertet werden kann) und
- für das zweite Fadenkreuz 9 (z.B. in seiner Form optimiert hinsichtlich eines Augenmass-Anvisierens eines Ziels durch einen Benutzer)
unterschiedliche Fadenkreuzformen gewählt werden können. Zudem können die beiden Fadenkreuze vorteilhaft derart sich ergänzend aufeinander abgestimmt sein, dass das seitens des Benutzers durch das Okular betrachtbare Spiegelbild des ersten Fadenkreuzes 1 und das direkt betrachtbare zweite Fadenkreuz 9 in der Zusammenschau eine Autokollimations-Ausrichtung des Teleskops möglichst einfach und dabei präzise anhand des Augenmasses des Benutzers überprüfbar (und z.B. auch manuell einstellbar) machen.

Figur 8e zeigt dabei die seitens des Benutzers durch das Okular betrachtbare Überlagerung von dem Spiegelbild des ersten Fadenkreuzes 1 und dem zweiten Fadenkreuz 9 in Autokollimations-Ausrichtung des Teleskops.

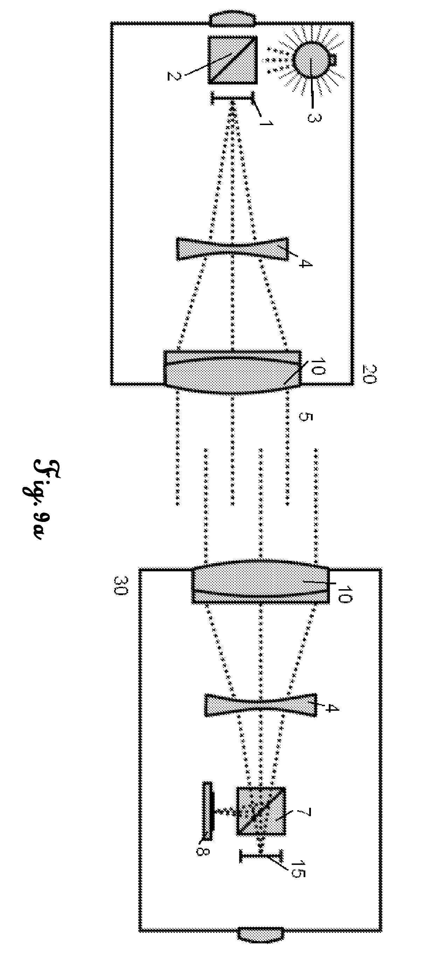

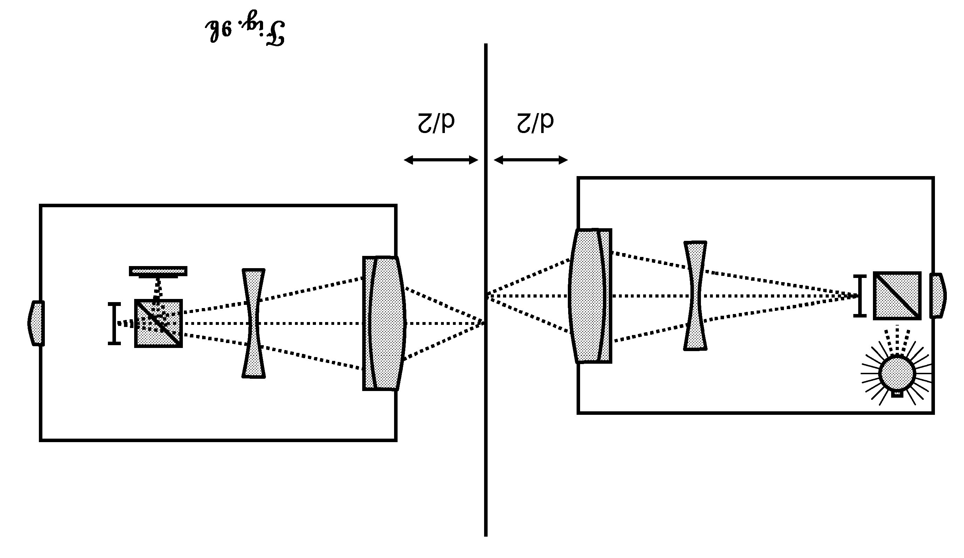

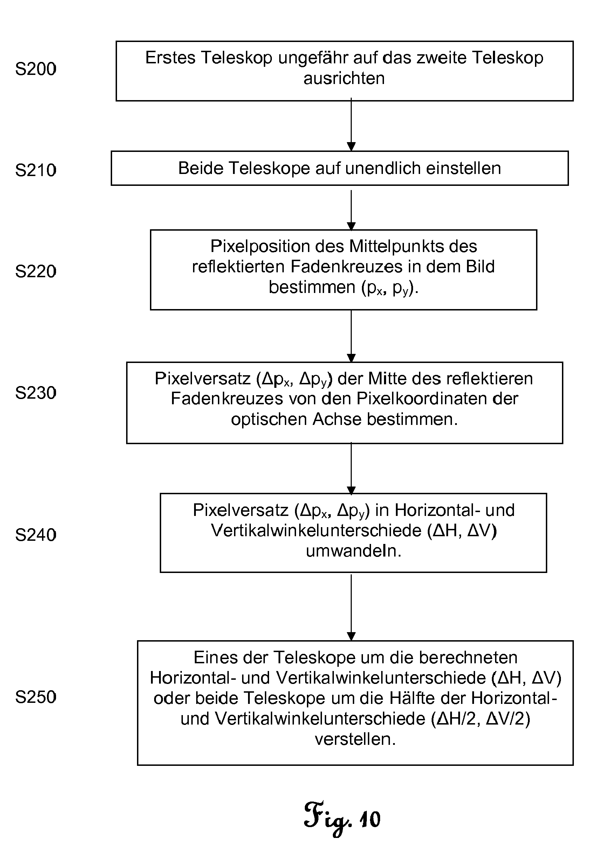

Eine weitere Anwendungsmöglichkeit des automatischen Autokollimationsvorgangs gemäss der Erfindung in Form einer Stereofotogrammetrie ist aus den Figuren 9a/b und 10 ersichtlich. Dieses Verfahren wird angewendet, um Objekte aus zwei Messbildern, die z.B. aus etwas verschiedenen Standpunkten aufgenommen wurden, in ihrer Lage und genauen Form zu bestimmen. Dabei ist es möglich, zu ermitteln aus welchem Blickwinkel (Orientierung) Bilder aufgenommen werden. Hierbei werden zwei Instrumente so zueinander ausgerichtet, dass die optischen Achsen ihrer Teleskope zusammenfallen, wodurch die Ausrichtung der beiden Instrumente ermittelt werden kann.

Wie aus Figur 9a ersichtlich ist, sind dazu die distalen Enden von zwei Teleskopen 20, 30 ungefähr zueinander ausgerichtet. Dies entspricht S200 in Figur 10. Das erste Teleskop 20 weist wie in den vorangehend beschriebenen Ausführungsformen zumindest die Beleuchtungseinrichtung 3, den Strahlenteiler 2, das beleuchtbare Fadenkreuz 1, die verschiebbare Fokuslinse 4 und die Sammellinse 10 auf.

Das zweite Teleskop 30 weist ebenfalls eine Sammellinse 10 und eine verschiebbare Fokuslinse 4 auf. Ausserdem ist in dem zweiten Teleskop 30 ein zweiter Strahlenteiler 7 angeordnet, der ausgelegt ist, von aussen entlang der optischen Achse des zweiten Teleskops 30 einfallende Lichtstrahlen zu einem Bildsensor einer Achsenkamera 8 abzulenken. Die Anordnung des Strahlenteilers 7 und des Bildsensors entspricht dabei der des in Figur 4 gezeigten Teleskops. Zwischen dem zweiten Strahlenteiler 7 des zweiten Teleskops 30 und dessen proximalen Ende befindet sich ein Fadenkreuz 15. Alternativ zu der hier dargestellten Mindest-Ausbaustufe der beiden Teleskope 20 und 30 können auch zwei jeweils voll ausgebaute Teleskope z.B. jeweils nach Figur 4 oder nach Figur 8 verwendet werden.

Nach der Einstellung der Fokuslinsen 4 beider Teleskope 20 und 30 auf unendlich (S210 in Figur 10), werden die von dem ersten Teleskop ausgesendeten Lichtstrahlen 5 von einer Sammellinse 10 des zweiten Teleskops gebündelt und über den zweiten Strahlenteiler 7 zu dem Bildsensor 8 abgelenkt. Die darauf folgende Verarbeitung der Schritte 220 bis 240 entspricht den mit Bezug auf Figuren 5 und 7 beschriebenen Schritten 120 bis 140.

Im nächsten Schritt zur Parallelausrichtung der beiden Teleskope 20 und 30 wird eines der beiden Teleskope um die berechneten Winkelunterschiede ΔH und ΔV verstellt, oder beide Teleskope 20, 30 werden um die halben Winkelunterschiede ΔH/2 und ΔV/2 verstellt. Durch dieses Vorgehen können die beiden optischen Achsen parallel zueinander ausgerichtet werden.

Ist die Distanz zwischen den beiden Teleskopen bekannt oder wird diese gemessen, dann können die beiden optischen Achsen z.B. durch die im Folgenden näher beschriebene Vorgehensweise zur Deckung gebracht werden. Beide Teleskope werden - manuell oder motorisiert - auf die halbe Distanz d/2 zwischen den Teleskopen fokussiert (siehe dazu die beispielhafte Darstellung aus Figur 9b, die sich lediglich hinsichtlich der Fokusstellungen der beiden Teleskope von der Darstellung aus Figur 9a unterscheidet). Die optischen Strahlen sind nun also nicht mehr parallel sondern auf die Objektebene in der halben Distanz fokussiert. Die beiden Fadenkreuze überlagern sich in der Objektebene und der horizontale und vertikale Versatz können wiederum über Bildverarbeitung berechnet werden. Der Pixelversatz wird in Winkelunterschiede (ΔH und ΔV) umgerechnet, und die beiden Teleskope jeweils um den die Hälfte der Horizontal- und Vertikalwinkelunterschiede (ΔH/2 und ΔV/2) verstellt. Somit werden beide optischen Achsen zur Übereinstimmung gebracht. Zur Erhöhung der Genauigkeit kann der Vorgang wiederum auch iterativ durchgeführt werden - analog zum vorgängig detailliert beschriebenen iterativen Vorgehen beim Autokollimieren eines Teleskops bezüglich eines Spiegels.

Während der Ausrichtung der beiden Teleskope 20, 30 gleichen die erfassten Bilder den in Figur 6a bis 6d dargestellten Bildern.

Folgende Modifikationen der Ausführungsbeispiele sind ebenfalls möglich. Anstelle eines beleuchteten Fadenkreuzes und den entsprechenden Lichtstrahlen ist gemäss der Erfindung auch ein kollimierter Laserstrahl einsetzbar, der parallel zu oder im Idealfall entlang der optischen Achse eines Teleskops ausgesendet wird. Der Laserstrahl wird von dem Autokollimationsziel reflektiert. Auf Basis des Unterschieds der Position des reflektierten Laserstrahls zur optischen Achse bzw. zum ausgesandten Laserstrahl werden dann die Neigung und die Orientierung des Autokollimationsziels bestimmt.

Sollte der ausgesandte Laserstrahl nicht parallel zur optischen Achse des Teleskops liegen oder mit ihr zusammenfallen, muss die Abweichung durch eine vorangehende Kalibrierung ermittelt und dann bei der Bestimmung der Winkelunterschiede berücksichtigt werden.

Die Erfindung wurde anhand von derzeit bevorzugten Ausführungsbeispielen beschrieben, es wird aber darauf hingewiesen, dass der Schutzumfang alleine durch die anhängenden Ansprüche bestimmt ist.

Es sei nochmals explizit darauf hingewiesen, dass die Bezeichnung der in den Figuren und den Ansprüchen definierten Tätigkeiten des erfindungsgemässen Verfahrens als Schritte S100 bis S250 bzw. Schritte a), b), etc. keineswegs ein notwendigerweise getrennt zu erfolgendes Durchführen dieser Tätigkeiten fordert bzw. impliziert. Auch wird durch die Namensgebung der Schritte mit S100, S110, S120, ..., S200, S210, usw. bzw. a), b), c), etc. nicht notwendigerweise eine spezielle Reihenfolge der Durchführung der Tätigkeiten gefordert. Hingegen können im Rahmen des erfindungsgemässen Verfahrens die als Schritte benannten Tätigkeiten auch kombiniert und/oder zusammengefasst (d.h. gemeinsam, zeitgleich oder teilweise mit zeitlichem Überschnitt) durchgeführt werden. Zudem können die erfindungsgemäss erfolgenden Tätigkeiten im Rahmen des Verfahrens (die hier lediglich aus Handhabungsgründen als "Schritte" benannt sind) auch in einer anderen als der beispielhaft aufgeführten Reihenfolge durchgeführt werden. Z.B. kann etwa - wie dem Fachmann klar - das Einstellen des Fokussierglieds des Teleskops auf unendlich sowohl vor, nach oder während (d.h. gemeinsam mit) der Durchführung des Schritts des Ausrichtens des Teleskops auf das Autokollimationsziel erfolgen (bzw. auch teilweise zeitlich überschnitten).

Es versteht sich zudem, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Verfahren zur Autokollimation, als Ausrichten eines eine optische Achse definierenden Teleskops eines Vermessungsinstruments derart, dass die optische Achse senkrecht zu einer spiegelnden Oberfläche eines Autokollimationsziels (6), insbesondere eines beschichteten Planspiegels, steht,
mit folgenden Schritten:
• a) Ausrichten des Teleskops auf das Autokollimationsziel (6);
• b) Beleuchten eines Fadenkreuzes (1) in dem Teleskop;
• c) Fokussieren des Teleskops auf unendlich;
• d) Erfassen des Autokollimationsziels (6) und des von der spiegelnden Oberfläche reflektierten, beleuchteten Fadenkreuzes (1) oder des beleuchteten Fadenkreuzes (1) mittels einer in dem Teleskop oder einem zweiten Teleskop (30) angeordneten Bilderfassungseinrichtung;
• e) Bestimmen des Fadenkreuzmittelpunkts (1) in dem Bild;
• f) Bestimmten des horizontalen (Δpx) und des vertikalen (Δpy) Abstands des Fadenkreuzmittelpunkts (1) von der optischen Achse (11) des Teleskops in dem Bild;
• g) Umwandeln des horizontalen (Δpx) und des vertikalen (Δpy) Abstands des Fadenkreuzmittelpunkts (1) in einen horizontalen (ΔH) und einen vertikalen (ΔV) Abweichungswinkel der aktuellen Ausrichtung des Teleskops von der Autokollimations-Ausrichtung des Teleskops.

2. Verfahren nach Anspruch 1, mit folgenden zusätzlichen Schritten:
• h) Bewegen des Teleskops um die Hälfte des horizontalen (ΔH/2) und des vertikalen (ΔV/2) Abweichungswinkels, damit die optische Achse des Teleskops senkrecht auf das Autokollimationsziel (6) steht,
• i) Messen des Horizontal- (H) und des Vertikalwinkels (V) des Teleskops, und
• j) Berechnen des Neigungswinkels und des Orientierungswinkels des Ziels aus dem gemessenen Horizontal- (H) und Vertikalwinkel (V),
oder
• i2) Messen des Horizontal- (H) und des Vertikalwinkels (V) des Teleskops, und
• k) Bestimmen des Neigungswinkels und des Orientierungswinkels des Autokollimationsziels durch das Hinzuzählen des halben horizontalen (ΔH/2) und des halben vertikalen (ΔV/2) Abweichungswinkels zu dem gemessenen Horizontal- (H) bzw. Vertikalwinkel (V) des Teleskops.

3. Verfahren nach einem der Ansprüche 1 oder 2, wobei die optische Achse (11) dem Bildmittelpunkt entspricht und/oder die Bestimmung des horizontalen (Δpx) und des vertikalen (Δpy) Abstands des Fadenkreuzmittelpunkts (1) von der optischen Achse (11) des Teleskops in dem Bild aus der Zahl der Pixel zwischen dem Fadenkreuzmittelpunkt (1) und der optischen Achse (11) ermittelt wird.

4. Verfahren nach einem der Ansprüche 1 bis 3, wobei die Schritte ab dem Schritt e) in einer iterativen Weise durchgeführt werden, bis der horizontale und der vertikale Abweichungswinkel unterhalb eines vorbestimmten Schwellwerts liegen.

5. Verfahren nach einem der Ansprüche 1 bis 4, wobei die Schritte a), c) und d) mittels automatischem Abfahren eines vorbestimmten Suchmusters durch eine automatische Drehung des Teleskops erfolgen, wobei die Fokuslinse (4) automatisch auf unendlich bzw. scharf gestellt wird und das Autokollimationsziel (6) durch einen Vergleich des erfassten Bilds mit einem vorgegebenen Vergleichsbild erkannt wird.

6. Verfahren nach einem der Ansprüche 1 bis 5, wobei das Autokollimationsziel (6) gemäss dem horizontalen (ΔH) und dem vertikalen (ΔV) Abweichungswinkel derart bewegt wird, dass es senkrecht auf die optische Achse des Teleskops liegt.

7. Verfahren nach einem der Ansprüche 1 bis 6, wobei als Autokollimationsziel ein zweites, mit einer Achsenkamera ausgestattetes Teleskop (30) dient, und im Schritt f) der horizontale (Δpx) und der vertikale (Δpy) Abstand des Fadenkreuzmittelpunkts (1) von der optischen Achse des zweiten Teleskops (30) in dem Bild als Grundlage für die auf den Schritt f) folgenden Schritte bestimmt wird,
und insbesondere wobei eines der Teleskope (20, 30) um den horizontalen (ΔH) und den vertikalen (ΔV) Abweichungswinkel bewegt wird, oder beide Teleskope (20, 30) um jeweils den halben (ΔH/2) horizontalen und den halben vertikalen (ΔV/2) Abweichungswinkel bewegt werden.

8. Teleskop zum Einsatz in einem Vermessungsinstrument und zur Verwendung im Rahmen des Verfahrens nach einem der Ansprüche 1 bis 7, mit:
• einer Lichtquelle (3),
• einem durch die Lichtquelle beleuchtbaren Fadenkreuz (1),
• einem ersten Strahlenteiler (2), der an einem proximalen Ende des Teleskops angeordnet ist, um von der Lichtquelle (3) abgegebene Lichtstrahlen entlang der optischen Achse des Teleskops abzulenken,
• einer an einem distalen Ende des Teleskops angeordnete, entlang der optischen Achse hin und her bewegliche Fokuslinse (4),
**gekennzeichnet durch**
einen zwischen dem ersten Strahlenteiler (2) und der beweglichen Fokuslinse (4) angeordneten zweiten Strahlenteiler (7), der ausgelegt ist, von einem Autokollimationsziel (6) reflektierte Lichtstrahlen zu einer Abweichungsbestimmungseinrichtung (8) umzulenken, **durch** die eine Abweichung des Lichtstrahls von der optischen Achse des Teleskops bestimmbar ist.

9. Teleskop nach Anspruch 8, wobei die von dem Autokollimationsziel (6) reflektierten Lichtstrahlen zu einer Bilderfassungseinrichtung (8) umgelenkt werden, und die Abweichung der Lichtstrahlen von der optischen Achse des Teleskops aus einem von der Bilderfassungseinrichtung (8) erfassten Bild bestimmbar ist.

10. Teleskop nach Anspruch 8 oder 9, das ausserdem eine Schnittstelle zur Kommunikation mit einem externen Gerät aufweist.

11. Teleskop nach einem der Ansprüche 8 bis 10, wobei das beleuchtbare Fadenkreuz auf der optischen Achse des Teleskops zwischen dem ersten Strahlenteiler (2) und der beweglichen Fokuslinse (4) und/oder zwischen dem ersten Strahlenteiler (2) und dem zweiten Strahlenteiler (7) angeordnet ist.

12. Teleskop nach einem der Ansprüche 8 bis 10, wobei das beleuchtbare Fadenkreuz (1) zwischen der Lichtquelle (3) und dem ersten Strahlenteiler (2) angeordnet ist, und ein zweites Fadenkreuz (9) zwischen dem proximalen Ende des Teleskops und dem ersten Strahlenteiler (2) angeordnet ist.

13. Teleskop nach einem der Ansprüche 8 bis 12, wobei das beleuchtbare Fadenkreuz (1) und das zweite Fadenkreuz (9) unvollständig ausgebildet sind, und das beleuchtbare Fadenkreuz (1) in dem Bild durch seine Spiegelung um die horizontale und/oder die vertikale Achse und/oder durch das zweite Fadenkreuz (9) und/oder eine Spiegelung des zweiten Fadenkreuzes (9) um seine horizontale und/oder seine vertikale Achse vervollständigbar ist.

14. Teleskop nach einem der Ansprüche 8 bis 13, wobei das Teleskop oder das Teleskop und die Fokuslinse (4) mit einem Motor versehen sind.

15. Vermessungsinstrument, insbesondere Industrievermessungs-Theodolit oder Industrievermessungs-Totalstation, mit
• einer - insbesondere auf ein Stativ montierbaren - Basis,
• einem an der Basis um eine Drehachse drehbar gelagerten Oberteil,
• einem am Oberteil um eine Schwenkachse schwenkbar gelagerten Teleskop nach einem der Ansprüche 8 bis 14, und
• einer Auswerte- und Steuereinheit,
wobei
• eine räumliche Ausrichtung der Anzieleinheit gegenüber der Basis über zwei Winkelmesser erfassbar ist und
• insbesondere ein erster und ein zweiter Drehantrieb das Oberteil (12) bzw. das Teleskop antreib- und ausrichtbar machen,
und wobei das Vermessungsinstrument eine nach Auslösung zumindest teilweise automatisch ablaufende Autokollimations-Funktionalität aufweist, in deren Rahmen das Verfahren nach einem der Ansprüche 1 bis 7 automatisch gesteuert durch die Auswerte- und Steuereinheit durchführbar ist.
